# DEMANDE DE BREVET EUROPEEN

(11) **EP 1 632 715 A1**
(43) Date de publication de la demande: **08.03.2006**
(21) Numéro de dépôt: 05291536.0
(22) Date de dépôt: 13.07.2005
(51) Int. Cl.: F23C 99/00

(54) **Dispositif pour la production d'un gaz chaud par oxydation utilisant un réacteur rotatif simulé**

(30) Priorité: 02.08.2004 FR 0408549
(71) Demandeur: Institut Français du Pétrole, 92852 Rueil Malmaison Cédex (FR)
(72) Inventeur: Lebas, Etienne, 38200 Vienne (FR); Bertholin, Stéphae, 69100 Villeurbanne (FR); Nougier, Luc, 69110 Sainte Foy les Lyon (FR); Fischer, Béatrice, 69005 Lyon (FR)

(57) **Abrégé**

L'invention concerne un dispositif pour la production d'un gaz chaud par oxydation d'un matériau actif présentant une forme oxydée et une forme réduite au moyen d'un réacteur à rotation simulée.

## Description

### Domaine de l'invention:

Le domaine de la présente invention est celui de la production d'énergie, des turbines à gaz, des chaudières et des fours, notamment pour l'industrie pétrolière, verrière et en cimenterie. Le domaine de l'invention couvre également l'utilisation de ces différents moyens pour la production d'électricité, de chaleur ou de vapeur.

Le domaine de l'invention regroupe, plus particulièrement, les dispositifs et les procédés permettant, par la mise en oeuvre de réactions d'oxydoréduction d'une phase active, de produire un gaz chaud à l'aide d'un hydrocarbure ou d'un mélange d'hydrocarbures et d'isoler le dioxyde de carbone produit de façon à pouvoir le capturer. L'invention s'applique également au domaine de la production d'hydrogène ou d'oxygène.

La croissance de la demande énergétique mondiale conduit à construire de nouvelles centrales thermiques et à émettre des quantités croissantes de dioxyde de carbone préjudiciables pour l'environnement. La capture du dioxyde de carbone en vue de sa séquestration est ainsi devenue une nécessité incontournable.

### Examen de l'art antérieur:

L'une des techniques pouvant être utilisées pour capturer le dioxyde de carbone consiste à mettre en oeuvre des réactions d'oxydoréduction d'une phase active pour décomposer la réaction de combustion habituellement utilisée en deux réactions successive:
- Une réaction d'oxydation de la phase active avec de l'air permet, grâce au caractère exothermique de l'oxydation, d'obtenir un gaz chaud dont l'énergie peut être exploitée.
- Une réaction de réduction de la phase active ainsi oxydée à l'aide d'un gaz réducteur, permet ensuite d'obtenir une phase active réutilisable ainsi qu'un mélange gazeux comprenant essentiellement du dioxyde de carbone et de l'eau.

Le découplage ainsi réalisé entre la phase d'oxydation et la phase de réduction permet une séparation ultérieure plus aisée du dioxyde de carbone à partir d'un mélange gazeux pratiquement dépourvu d'oxygène et d'azote.

L'état de l'art fait apparaître des systèmes permettant la récupération du C02, mais pas selon la présente invention qui consiste à utiliser un réacteur rotatif simulé qui va permettre de gérer 3 phases successives et distinctes; une phase d'oxydation, une phase de balayage et une phase de réduction, ces 3 phases se succédant au cours du temps selon une séquence bien déterminée.

Le brevet américain US 5,447,024 décrit un procédé comprenant un premier réacteur mettant en oeuvre une réaction de réduction d'un oxyde métallique à l'aide d'un gaz réducteur, et un second réacteur produisant le dit oxyde métallique par réaction d'oxydation avec de l'air humidifié. Les gaz d'échappement issus des deux réacteurs sont introduits dans les turbines à gaz d'une centrale électrique. Le procédé décrit dans ce brevet permet, grâce aux réactions d'oxydoréduction sur un métal, d'isoler le dioxyde de carbone par rapport à l'azote, ce qui facilite ainsi la capture du dioxyde de carbone.

Cependant, la mise en oeuvre d'un tel procédé nécessite l'utilisation de deux réacteurs distincts et de moyens de transport d'une phase active qui se présente sous forme de particules solides. Il en résulte qu'un tel procédé est relativement compliqué à mettre en oeuvre et entraîne des coûts d'exploitation et de maintenance importants. En outre, l'entraînement de fines particules de la phase active dans les gaz d'échappement peut être une source d'inconvénients par rapport aux traitements ultérieurs de ces gaz.

L'un des objets de l'invention est donc de pouvoir isoler facilement le dioxyde de carbone produit par des générateurs thermiques de différents types, notamment des turbines à gaz, des fours et des chaudières, afin d'en faciliter la capture, et ceci en s'affranchissant des problèmes évoquées ci-dessus.

Un autre objet de l'invention est d'améliorer le dispositif décrit dans la demande FR 2,846,710 qui concernait un réacteur rotatif réel au sens où le réacteur objet de l'invention présentait une rotation matérielle entre une partie fixe et une partie mobile. Ce type de réacteur demande en effet la réalisation de pièce d'étanchéité entre la partie fixe et la partie mobile assez difficile à réaliser, au moins à partir d'une certaine taille de réacteur.

### Description de l'invention:

Le type de réacteur décrit dans la présente demande permet de réaliser les mêmes réactions que celui décrit dans la demande FR 2,846,710, mais sans faire appel à une rotation réelle. La rotation, ou plus précisément le passage d'une configuration du réacteur à une autre, est obtenue dans la présente demande par le décalage dans le temps et à périodicité fixée, d'un ensemble de modules, de préférence identiques, et ayant chacun la possibilité d'être alimenté par des moyens spécifiques en un gaz oxydant, un gaz réducteur ou un gaz inerte ( appelé indifféremment gaz de balayage).

On appellera dans la suite du texte phase l'une quelconque des phases d'oxydation, de réduction ou de balayage, ainsi que les moyens matériels permettant de réaliser la dite phase.

Ces moyens matériels comprennent essentiellement le système de vannes permettant de délivrer sur chaque module, en fonction de la période de temps considérée, le gaz oxydant, le gaz de balayage, ou le gaz de réduction. Ces moyens sont spécifiques à chaque module.

L'invention concerne donc un dispositif pour la production d'un gaz chaud par oxydation d'un matériau actif, le dispositif comprenant une pluralité de modules réactionnels, chacun d'entre eux pouvant au cours du temps se trouver en phase d'oxydation, de réduction ou de balayage. Les modules, de préférence identiques, sont regroupés en zone correspondant à la ou les zones d'oxydation, de réduction ou de balayage.

Chaque zone est définie par le nombre de modules qu'elle contient, c'est à dire le nombre de modules successifs travaillant tous dans l'une des phases bien déterminée d'oxydation, de réduction ou de balayage.

Tous les modules d'une même zone travaillent aux mêmes conditions opératoires. Du fait du décalage périodique dans le temps de la phase dans laquelle travaillent les modules, bien que les modules soient matériellement fixes, les zones vont se déplacer au cours du temps à la vitesse d'un module par période de décalage, pour se retrouver dans leur position initiale au bout d'un certain temps qui sera un multiple de la période de décalage, et qu'on dénommera temps de cycle.

C'est en ce sens qu'on parlera de rotation simulée.

Le dispositif selon l'invention peut donc se définir comme un dispositif pour la production d'un gaz chaud par oxydation d'un matériau actif comportant un ensemble de modules réactionnels, chaque module comportant un matériau actif travaillant en fonction du temps successivement en phase d'oxydation, de balayage et de réduction par mise en contact respectivement avec un gaz d'oxydation, de balayage ou de réduction, caractérisé en ce que ladite mise en contact est réalisée au moyen d'un système d'alimentation propre à chaque module et apte à recevoir en fonction du temps un gaz d'oxydation, de balayage ou de réduction, en ce que l'ensemble des modules successifs travaillant en phase d'oxydation forme la zone d'oxydation et produit dit gaz chaud, l'ensemble des modules travaillant en phase de réduction forme la zone de réduction et produit un effluent de réduction, l'ensemble des modules travaillant en phase de balayage forme la zone de balayage et produit un effluent composé principalement du gaz de balayage, et en ce que chaque zone comporte un nombre déterminé de modules se décalant à chaque période de temps (T) d'un incrément égal à un module, de manière que chaque module travaille au cours du temps selon une séquence oxydation, balayage, réduction, balayage, oxydation; la dite phase de balayage suivant toujours la phase d'oxydation ou la phase de réduction.

Dans la suite du texte on ne fera pas la distinction entre le cas où le réacteur comporte une seule zone d'oxydation, de réduction et de balayage, et le cas où il en comporte plusieurs, car ce dernier cas n'amène aucune modification dans le fonctionnement du réacteur.

De manière générale, on peut dire que le nombre de modules travaillant en zone d'oxydation rapporté au nombre de modules travaillant en zone de balayage est compris entre 1 et 12, et préférentiellement entre 1 et 10.

L'invention concerne également un procédé pour la mise en oeuvre du dispositif décrit ci-dessus.

Le matériau actif utilisé dans le dispositif objet de l'invention comprend généralement au moins un métal pouvant se présenter alternativement sous une forme oxydée ou réduite.

On entend par forme oxydée, toute forme du métal ayant subi une réaction d'oxydation. De la même façon, on entend par forme réduite toute forme du métal ayant subi une réaction de réduction, c'est à dire se trouvant à un degré d'oxydation inférieur à celui correspondant à la forme oxydée.

Par exemple, la molécule CeO₂ correspond à une forme réduite par rapport à la molécule CeO₃.

Le métal ou les métaux du matériau actif peuvent être choisis dans le groupe constitué par le cuivre, le nickel, le cérium, le cobalt, le fer ou être une combinaison quelconque de ces métaux.

De préférence, le métal ou les métaux du matériau actif sont choisis dans le groupe constitué par le nickel et le cérium.

Selon l'invention, les modules de réaction possèdent une surface d'échange recouverte, au moins en partie, par le matériau actif.

Le gaz oxydant est un gaz comprenant un composé oxydant, généralement de l'oxygène.

Le gaz oxydant peut comporter de 5 à 100 % en poids, de préférence de 7 à 70 % en poids, de manière encore plus préférée de 10 à 30 % en poids d'oxygène.

Le gaz oxydant utilisé dans le dispositif de l'invention est préférentiellement de l'air ou de l'air humidifié. Ainsi, sous l'action du gaz oxydant, une partie au moins du matériau actif passe progressivement d'une forme réduite à une forme oxydée. L'oxydation étant une réaction exothermique, il s'ensuit donc que l'effluent produit par la réaction d'oxydation est chaud. On appellera gaz chaud le gaz produit à l'issue de la phase d'oxydation.

Le gaz réducteur est généralement constitué d'un mélange d' hydrocarbures et de vapeur d'eau. Il pourra s'agir dans certains cas du gaz naturel. Le gaz réducteur peut comprendre au moins 30 %, de préférence au moins 50 % en poids de méthane.

Il pourra dans certains cas être constitué d'un mélange de monoxyde de carbone, de dioxyde de carbone et d'hydrogène bien connu de l'homme du métier sous l'appellation de gaz de synthèse.

Il pourra dans le cas le plus général, être constitué d'un mélange quelconque d'hydrocarbures, de vapeur d'eau, de monoxyde de carbone , de dioxyde de carbone et d'hydrogène.

Ainsi, sous l'action du gaz réducteur, une partie au moins du matériau actif passe progressivement d'une forme oxydée à une forme réduite.

De préférence, le gaz inerte est constitué d'un mélange de dioxyde de carbone et de la vapeur d'eau.

Sous l'action du gaz inerte ( ou de balayage), les modules de réaction sont balayés avant leur fonctionnement en oxydation ou en réduction de manière à éviter tout risque d'explosion qui pourrait résulter de la mise en contact du gaz oxydant et du gaz réducteur.

### Description sommaire des figures:

La figure 1 décrit un schéma de principe du réacteur à rotation simulé dans une configuration verticale nullement limitative de l'invention.

La figure 2 concerne un module et montre un exemple de vannes associées à chaque module, permettant de délivrer au cours du temps en entrée 3 fluides distincts correspondant aux 3 voies A, B, C, et en sortie les 3 effluents correspondants aux 3 voies D,E,F.

### Description détaillée de l'invention:

Le dispositif selon l'invention appelé réacteur rotatif simulé (en abrégé RRS) est constitué d'un ensemble de modules identiques, chaque module pouvant en fonction du temps travailler en phase d'oxydation, de réduction ou de balayage.

Les modules sont matériellement regroupés de manière très diverse selon les applications. Dans les applications mettant en oeuvre des réactions se déroulant sous pression, il pourra être intéressant de regrouper les modules sous une forme compacte à l'intérieur d'une enceinte de préférence cylindrique.

Une autre disposition consiste à prévoir que chaque module résiste à la pression imposée par l'application, qui peut dans certains cas atteindre plusieurs dizaine de bars, ce qui permet alors de disposer simplement les modules sur un skid (qu'on peut traduire par système de supportage).

Dans d'autres applications, les modules pourront être alignés selon un axe commun d'angle quelconque par rapport à la verticale en fonction de contraintes d'encombrement. II est important de souligner que l'invention n'est en aucun cas liée à une disposition particulière des modules.

L'invention repose sur le fait que chaque module, quelle que soit la configuration dans laquelle il est engagé, fonctionne en fonction du temps en phase d'oxydation, de balayage, de réduction, de balayage, les phases se succédant dans cet ordre qui définit la séquence de fonctionnement du réacteur.

La période de temps pendant laquelle un module quelconque fonctionne dans une des phases déterminées d'oxydation, de balayage ou de réduction permet de définir complètement la séquence. Cette période de temps est égale à la période de décalage multipliée par le nombre de modules correspondant à une zone déterminée. La séquence de fonctionnement du réacteur est donc parfaitement définie par la suite des zones (d'oxydation, balayage et réduction) et le nombre de modules que chacune d'entre elle contient.

Chaque module possède une extrémité d'entrée par laquelle est admis le gaz d'entrée, et une extrémité de sortie par laquelle est admis le gaz de sortie ou effluent. L'extrémité d'entrée est équipée d'un système de vannes qui lui permet en fonction de la période de temps considérée, de recevoir le gaz oxydant, le gaz de balayage ou le gaz réducteur.

L'extrémité de sortie est équipée de la même manière d'un système de vannes qui lui permet de recevoir en fonction de la période de temps considérée, l'effluent de la phase d'oxydation, à savoir le gaz chaud, le gaz de balayage contenant éventuellement quelques traces de l'effluent de la phase d'oxydation ou de réduction précédente, et l'effluent de la phase de réduction.

Les modules n'ont pas de communication entre eux et fonctionnent en parallèle.

Ils sont simplement juxtaposés selon la configuration retenue. Bien entendu, des éléments mécaniques de fixation, bien connus de l'homme du métier, les maintiennent dans leur position relative.

Ces éléments de fixation peuvent être très divers et ne sont en aucun cas limitatifs de la présente invention.

Chaque module comporte un matériau actif qui est choisi parmi un ensemble de matériaux métalliques pouvant avoir deux formes, une forme oxydée et une forme réduite.

La forme oxydée du matériau actif est obtenue au moyen d'un gaz oxydant et la forme réduite du matériau actif est obtenue au moyen d'un gaz réducteur.

Un troisième gaz, généralement de la vapeur d'eau, sert à la phase de balayage.

A titre d'exemple, dans le cas d'un matériau actif à base de nickel, d'un gaz oxydant à base d'oxygène, et d'un gaz réducteur à base de méthane, les réactions d'oxydoréduction peuvent être illustrées par les formules suivantes :

2 Ni + O2 -> 2 NiO,

4 NiO + CH₄ -> CO₂ + 2 H₂O + 4 Ni

dans lesquelles Ni est le nickel sous sa forme réduite, et NiO est le nickel sous sa forme oxydée.

Dans le cas d'un matériau actif à base de cérium, d'un gaz oxydant à base d'oxygène, et d'un gaz réducteur à base de méthane, les réactions d'oxydoréduction peuvent être illustrées par les formules suivantes :

2 Ce₂O₃ + O2 -> 4 CeO₂,

8 CeO₂ + 4 CH₄ -> 4 CO₂ + 2 H₂O + 4 Ce₂O₃

dans lesquelles CeO₂ est le cérium sous sa forme réduite, et Ce₂O₃ est le cérium sous sa forme oxydée.

Dans un mode de réalisation de l'invention, chaque module peut être constitué d'un ensemble de monolithes alignés selon un même axe, tels que ceux qui sont utilisés dans les pots catalytiques.

Chaque monolithe définit une pluralité de canaux parallèles de dimension typique de l'ordre du millimètre. Ce système de canaux parallèles peut être revêtu sur sa paroi interne d'un revêtement (appelé "coating" dans la terminologie anglo saxonne) qui constituera après imprégnation le matériau actif dont il a été parlé plus haut.

Les techniques de revêtement sont bien connues de l'homme du métier, et la présente invention n'est pas liée à une technique particulière de revêtement.

Le gaz oxydant, réducteur ou de balayage selon la phase considérée, circule à l'intérieur des dits canaux qui offrent, après l'opération de revêtement, une importante surface d'échange.

Typiquement, dans un monolithe standard du type de ceux utilisés pour la fabrication des pots catalytiques, la surface d'échange peut être de l'ordre de la centaine de m2 par mètre de longueur de canaux.

Dans un autre mode de réalisation de l'invention, chaque module peut être constitué d'un ensemble de billes ou d'extrudés contenus dans un panier poreux permettant le passage du gaz à l'intérieur du dit module.

Dans un autre mode de réalisation de l'invention, le matériau actif peut être déposé sur un substrat ayant la forme d'une mousse ou d'une éponge comprenant des pores constituant des passages à travers lesquels circule le gaz.

Selon un mode préféré de réalisation de l'invention, chaque module comprend un ensemble de monolithes alignés selon un même axe, définissant un réseau de canaux parallèles et de dimension comprise entre 1 et 5 mm pour le côté.

Le monolithe comprend généralement un revêtement sur les parois internes des canaux, revêtement sur lequel est déposé le matériau actif.

Il est également possible d'utiliser un monolithe constitué de façon massive par le matériau actif lui-même.

Le monolithe peut être constitué d'un alliage métallique ou de céramique.

Les matériaux utilisés pour le monolithe peuvent être, par exemple, de l'alumine dense, de la mullite, du carbure de silicium, de la cordiérite ou un alliage à base de fer, de chrome et d'aluminium, tel que du Fecralloy (FeCrAl).

Le revêtement peut comprendre un ou plusieurs oxydes réfractaires de surface et de porosité supérieures à celle du monolithe. De préférence, le revêtement est à base d'alumine ou de zircone, éventuellement dopée par des terres rares ou de la silice.

Le monolithe comprend, de préférence, de la cordiérite sur laquelle est déposé le matériau actif, par l'intermédiaire d'un revêtement à base d'alumine ou de zircone.

Le matériau actif confère au monolithe une fonction chimique, pour la mise en oeuvre des réaction d'oxydoréduction visées dans le cadre de l'invention, et la structure en canaux développant une importante surface spécifique va permettre une fonction physique de transfert thermique.

Il est en effet important que la phase de réduction généralement endothermique, se déroule sur un ensemble de monolithes ayant conservé le niveau thermique qu'ils ont atteint à l'issue de la phase exothermique d'oxydation. En fait ce niveau thermique en début de phase de réduction sera généralement inférieur au niveau atteint à l'issue de la phase d'oxydation en raison de la phase intermédiaire de balayage qui va consommer une partie de la chaleur des monolithes. Ceci explique pourquoi cette phase de balayage doit être, si possible, réduite au minimum nécessaire.

Afin de maximiser le taux de conversion des réactions souhaitées, il est par ailleurs nécessaire que la surface d'échange entre le gaz et le matériau actif soit maximale.

Il est donc avantageux de choisir un monolithe présentant une densité de canaux la plus élevée possible.

La densité de canaux du monolithe est souvent comprise entre 100 et 900, et de préférence entre 200 et 600 CPSI (Cell per square inch, qu'on peut traduire par canaux par 6,4 cm2, soit 30 à 90 canaux par cm2) .

En général, le rapport entre la surface et le volume du monolithe augmente quand la densité des canaux est augmentée.

Les canaux ont généralement un diamètre équivalent compris entre 0,1 et 10 mm, de préférence entre 0,5 et 2 mm, par exemple 1 mm. Le terme diamètre équivalent doit être pris au sens de diamètre hydraulique, bien connu de l'homme du métier en mécanique des fluides.

Les moyens d'alimentation et d'évacuation de chaque module permettent respectivement d'alimenter et d'évacuer le gaz concerné en fonction de la période de temps considérée, à chaque extrémité des dits modules. Pour pouvoir assurer chacune des 3 phases de leur fonctionnement (oxydation, balayage et réduction), chaque module doit être équipé d'un moyen d'alimentation et d'évacuation en chacun des trois gaz correspondants, à savoir le gaz oxydant, le gaz de balayage et le gaz réducteur.

Les moyens d'alimentation peuvent comprendre un diffuseur. De la même façon, les moyens d'évacuation peuvent comprendre un collecteur. Les diffuseurs et les collecteurs ont pour fonction de permettre une bonne répartition du gaz d'alimentation ou d'évacuation sur toute la section d'un module. Ce point est important s'agissant d'alimenter de la manière la plus uniforme possible la pluralité de canaux constituant un module dans la variante préférée où l'on fait appel à une mise en oeuvre sous forme de monolithes.

L'invention concerne également un procédé de génération d'énergie utilisant le dispositif de la présente invention, dans lequel :
- on introduit en continu grâce à des moyens d'introduction spécifiques, un gaz oxydant, éventuellement comprimé, un gaz réducteur, et un gaz inerte dans les zones correspondantes du réacteur à rotation simulée, à savoir les zones d'oxydation, de réduction et de balayage,
- on récupère un gaz chaud comme effluent de la zone d'oxydation, un gaz comprenant essentiellement du dioxyde de carbone et de l'eau comme effluent de la zone de réduction, et un gaz de balayage comme effluent de la zone de balayage, cette récupération s'effectuant grâce à des moyens d'évacuation spécifiques, et
- on sépare le dioxyde de carbone de l'eau contenus dans l'effluent de la zone de réduction, dans une unité auxiliaire ne faisant pas partie de la présente invention.

De manière préférée, les calories du gaz comprenant essentiellement du dioxyde de carbone et de l'eau sont échangées sur un échangeur externe au dispositif selon l'invention, pour fournir de la vapeur.

Un intérêt essentiel de la présente invention est de permettre la récupération aisée d'un gaz contenant essentiellement du C02 et de l'eau, de manière à effectuer ultérieurement la séparation du C02 en vue de sa séquestration.

Un autre avantage de l'invention est de proposer un moyen simple, fiable et peu coûteux pour la mise en oeuvre de réactions d'oxydoréduction.

Une telle simplification est principalement due à la suppression des pièces tournantes ( par rapport notamment au dispositif décrit dans la demande FR 2,846,710), et au fait que chaque module du réacteur est apte à travailler au cours du temps en phase d'oxydation, de balayage et de réduction.

Un autre avantage de l'invention est de s'affranchir des problèmes liés au transport d'une phase active sous forme de particules. Le transport de ces particules implique des équipements spécifiques et coûteux. Le fait d'éviter la présence de fines particules dans les gaz d'échappements permet de diminuer notablement les coûts de maintenance.

Enfin, un autre avantage important de l'invention est de permettre la mise en oeuvre des réactions d'oxydoréduction dans un dispositif opérant avec des pertes de charge limitées, puisque toutes les variantes de mise en oeuvre du matériau actif, et notamment celle sous forme de monolithe, se caractérise par une très forte porosité.

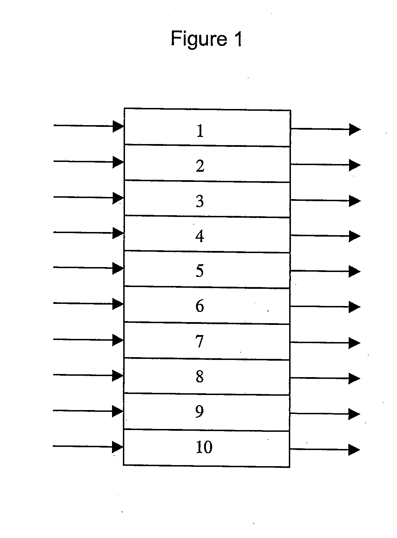

La figure 1 jointe permet de mieux comprendre le fonctionnement du réacteur selon l'invention sans la limiter puisque le nombre de modules et leur orientation peuvent être quelconques.

Le réacteur de la figure 1 comprend 10 modules étagés verticalement pour la facilité de la description, et numérotés de 1 à 10 en allant du haut vers le bas.

Les modules ne communiquent pas entre eux et reçoivent chacun le fluide d'entrée par une extrémité, et libèrent l'effluent de sortie par l'extrémité opposée à l'extrémité d'entrée.

Pour la clarté de l'explication nous supposons que dans la configuration initiale t0, la zone d'oxydation (notée o) correspond aux modules 1,2,3,9,10, la zone de balayage (notée i) correspond au module 4 et au module 8, la zone de réduction (notée r) correspond aux modules 5,6,7. Nous notons cette position d'origine oooirrrioo, en désignant par o les modules en phase d'oxydation, i les modules en phase de balayage et r les modules en phase de réduction.

Après une période de décalage T, soit à t0+T, les modules sont décalés d'une unité vers le bas.

On obtient donc pour les modules de 1 à 10 la configuration notée ooooirrrio.

A to+2T, on obtient la configuration oooooirrri et ainsi de suite.

On comprend mieux ainsi la notion de décalage dans le temps, et le fait qu'au bout d'un temps t= 10 T, on est revenu à la position initiale.

Chaque module est donc amené à travailler au cours du temps en phase d'oxydation, de balayage ou de réduction et le basculement d'une phase à l'autre est possible au moyen d'un système de vannes qui va délivrer pour chaque module le gaz correspondant à sa fonction à un instant t donné.

Le système de vannes ne fait pas l'objet de l'invention, et il est par exemple analogue à celui utilisé dans les réacteurs à contre courant simulé de type ELUXYL, décrits par exemple dans le brevet FR 2 762 793.

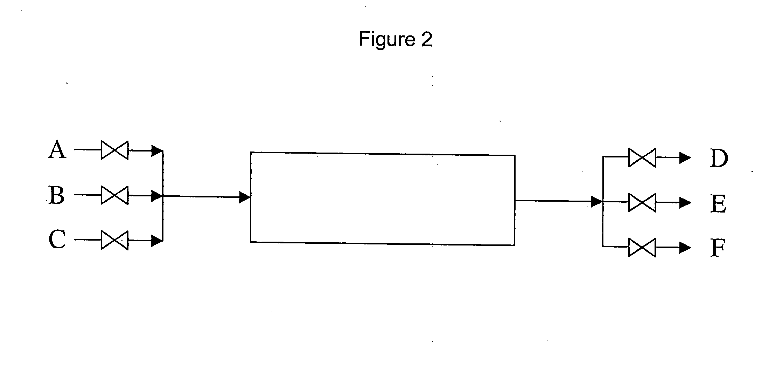

Le point important que doit réaliser ce système de vannes est d'être capable de délivrer sur chacun des modules du réacteur le gaz d'oxydation, de balayage ou de réduction selon la période concernée, tel que cela est schématisé sur la figure 2.

De la même manière, en sortie du module, un système de vanne permet de récupérer le gaz chaud, le gaz de balayage ou le gaz effluent de la phase de réduction.

Le dispositif pour la production d'un gaz chaud selon l' invention pourra en fonction des réactions mises en jeu posséder une répartition entre zone d'oxydation, zone de réduction et zone de balayage très variable d'un cas à l'autre, mais généralement, le nombre de modules travaillant en zone d'oxydation rapporté au nombre de modules travaillant en zone de balayage sera compris entre 1 et 12, et préférentiellement entre 1 et 10.

La période de décalage des modules du réacteur selon l'invention pourra également varier dans une plage assez large en fonction des réactions mises en jeu, mais généralement elle se situera entre 10 secondes et 500 secondes, et préférentiellement entre 10 secondes et 100 secondes.

La vitesse de circulation du gaz à l'intérieur de chaque module travaillant en phase d'oxydation de réduction ou de balayage sera généralement comprise entre 0,1 et 50 m/s, et préférentiellement comprise entre 0,5 et 10 m/s. Cette vitesse est évidemment limitée par la perte de charge qui peut devenir prohibitive.

### Exemple:

La présente invention sera mieux comprise à l'aide de l'exemple non limitatif décrit ci-après.

L'exemple décrit en relation avec la figure 1 permet de produire un gaz chaud exempt de CO₂, et des fumées contenant essentiellement du CO₂ à partir de gaz naturel.

Le gaz naturel utilisé a la composition suivante donnée en fractions molaires :

| | |
|---|---|
| Methane | 0.82 |
| Ethane | 0.094 |
| Propane | 0.047 |
| i-Butane | 0.008 |
| n-Butane | 0.008 |
| i-Pentane | 0.007 |
| Azote | 0.009 |
| Dioxyde de carbone | 0.007 |

Le réacteur utilisé, représenté schématiquement sur la figure 1, est constitué de 10 modules identiques de 1,3 m de diamètre et 3,8 m de longueur disposés sous forme de 2 rangées horizontales, chacune comportant 5 modules.

Chaque module contient 2293 kg de Nickel déposé sur les parois des monolithes de chaque module, et peut être alimenté de façon individuelle par de l'air, de la vapeur d'eau ou du gaz naturel comme cela est représenté schématiquement sur figure 2.

Les modules sont numérotés de 1 à 10 du haut vers le bas sur la figure 1, mais la représentation de la figure 1 est schématique et dans le réacteur selon l'exemple, il y a 2 rangées parallèles de 5 modules.

A chaque instant 7 modules consécutifs fonctionnent en phase d'oxydation (alimentation à l'air), 1 module fonctionne en phase de réduction (alimentation au gaz naturel) et 2 modules fonctionnent en phase de balayage, chacun de ces modules de balayage étant intercalé entre le groupe des modules fonctionnant en oxydation et le module fonctionnant en réduction.

Le réacteur est donc alimenté pour les modules fonctionnant en oxydation par de l'air à 20 bars et 500°C avec un débit de 278 kg/s. Ce débit est divisé en 7 flux identiques, chacun de ces 7 flux alimentant 7 modules consécutifs du réacteur.

Le réacteur est alimenté pour les modules fonctionnant en balayage par de la vapeur d'eau à 20 bars et 500°C avec un débit de 17 kg/s.

Ce débit est divisé en 2 flux identiques, chacun de ces 2 flux alimentant chacun des 2 modules fonctionnant en balayage.

Le réacteur est enfin alimenté en gaz naturel à 20 bars et 40°C avec un débit de 4 kg/s, ce débit alimentant en totalité le module du réacteur fonctionnant en réduction.
la période de décalage est de 30 secondes et la durée de cycle est de 300 secondes.
- A l'instant t=0, le module 1 est alimenté en gaz naturel, le module 2 est alimenté en vapeur d'eau, les modules 3 à 9 sont alimentés en air et le module 10 est alimenté en vapeur d'eau. Ceci correspond à la configuration rioooooooi
- A l'instant t=30s, les alimentations sont permutées : le module 1 est alimenté en vapeur d'eau, le module 2 est alimenté en gaz naturel, le module 3 est alimenté en vapeur d'eau et les modules 4 à 10 sont alimentés en air. Ceci correspond à la configuration: iriooooooo
- A l'instant t=60s, les alimentations sont à nouveau permutées : le module 1 est alimenté en air, le module 2 est alimenté en vapeur d'eau, le module 3 est alimenté en gaz naturel, le module 4 est alimenté en vapeur d'eau et les modules 5 à 10 sont alimentés en air. Ceci correspond à la configuration: oirioooooo

Les permutations se poursuivent ainsi de suite, suivant une période de 30 secondes.

Le cycle complet, c'est à dire la période de temps nécessaire pour que le réacteur se retrouve dans sa position initiale est de 300 secondes.

Les modules alimentés en air réalisent l'oxydation du Nickel en oxyde de Nickel et produisent de l'air chauffé à 1050°C.

Les deux modules alimentés en vapeur d'eau sont en phase de balayage.

Le module alimenté en gaz naturel réalise la réduction de l'oxyde de Nickel en Nickel et produit essentiellement du dioxyde de carbone et de l'eau, l'eau pouvant être condensée afin de disposer d'un flux contenant essentiellement du dioxyde de carbone.

Le réacteur produit ainsi 262 kg/s de gaz chaud à environ 1050°C contenant essentiellement de l'azote et de l'oxygène, et environ 2 kg/s de fumées contenant essentiellement du dioxyde de carbone et de l'eau.

## Revendications

1. Dispositif pour la production d'un gaz chaud par oxydation d'un matériau actif comportant un ensemble de modules réactionnels, chaque module comportant un matériau actif et travaillant en fonction du temps successivement en phase d'oxydation, de balayage et de réduction par mise en contact respectivement avec un gaz d'oxydation, de balayage ou de réduction, , **caractérisé en ce que** ladite mise en contact est réalisée au moyen d'un système d'alimentation propre à chaque module et apte à recevoir en fonction du temps un gaz d'oxydation, de balayage ou de réduction, en que l'ensemble des modules successifs travaillant en phase d'oxydation forme la zone d'oxydation et produit ledit gaz chaud, l'ensemble des modules travaillant en phase de réduction forme la zone de réduction et produit un effluent de réduction, l'ensemble des modules travaillant en phase de balayage forme la zone de balayage et produit un effluent composé principalement du gaz de balayage, et ne ce que chaque zone comporte un nombre déterminé de modules se décalant à chaque période de temps (T) d'un incrément égal à un module, de manière que chaque module travaille au cours du temps selon une séquence oxydation, balayage, réduction, balayage, oxydation.

2. Dispositif pour la production d'un gaz chaud selon la revendication 1 dans lequel le gaz oxydant contient de 5% à 100 % en poids, de préférence de 7% à 70 % en poids, de manière encore plus préférée de 10% à 30 % en poids d'oxygène.

3. Dispositif pour la production d'un gaz chaud selon l'une quelconque des revendications 1 ou 2 dans lequel le gaz de réduction contient essentiellement du méthane et de la vapeur d'eau.

4. Dispositif pour la production d'un gaz chaud selon l'une quelconque des revendications 1 à 3 dans lequel le gaz de balayage contient essentiellement du dioxyde de carbone ou de la vapeur d'eau.

5. Dispositif pour la production d'un gaz chaud selon l'une quelconque des revendications 1 à 4 dans lequel le matériau actif est constitué par un métal ayant au moins une forme oxydée et une forme réduite, choisi dans le groupe formé par le cuivre (Cu), le nickel (Ni), le cérium (Ce), le cobalt (Co) et le fer (Fe) ou une combinaison quelconque de ces métaux.

6. Dispositif pour la production d'un gaz chaud selon l'une quelconque des revendications 1 à 5 dans lequel chaque module est équipé d'un ensemble de monolithes identiques définissant une pluralité de canaux parallèles et dont les parois internes sont imprégnées du matériau actif.

7. Dispositif pour la production d'un gaz chaud selon l'une quelconque des revendications 1 à 5 dans lequel chaque module est équipé d'un ensemble de billes ou d'extrudés enfermés dans un panier poreux, les billes ou extrudés étant constitués au moins en partie du matériau actif.

8. Dispositif pour la production d'un gaz chaud selon l'une quelconque des revendications 1 à 5 dans lequel le nombre de modules travaillant en zone d'oxydation rapporté au nombre de modules travaillant en zone de balayage est compris entre 1 et 12, et préférentiellement entre 1 et 10.

9. Dispositif pour la production d'un gaz chaud selon l'une quelconque des revendications 1 à 8 dans lequel la période de décalage des modules du réacteur est comprise entre 10 secondes et 500 secondes, et préférentiellement entre 10 secondes et 100 secondes.

10. Dispositif pour la production d'un gaz chaud selon l'une quelconque des revendications 1 à 9, dans lequel la vitesse de circulation du gaz à l'intérieur de chaque module travaillant en phase d'oxydation de réduction ou de balayage est comprise entre 0,1 et 50 m/s et préférentiellement comprise entre 0,5 et 10 m/s.

11. Dispositif pour la production d'un gaz chaud selon l'une quelconque des revendications 1 à 10, dans lequel le monolithe constituant chaque module est constitué d'un alliage métallique ou de céramique, les matériaux utilisés étant choisi dans le groupe formé par l'alumine dense, la mullite, le carbure de silicium, la cordiérite ou un alliage à base de fer, de chrome et d'aluminium, tel que du Fecralloy (FeCrAl).

12. Procédé de génération d'énergie utilisant le dispositif selon l'une quelconque des revendications 1 à 11, dans lequel :
- on introduit un gaz oxydant, éventuellement comprimé, un gaz réducteur, et un gaz inerte dans les zones correspondantes du réacteur, à savoir les zones d'oxydation, de réduction et de balayage,
- on récupère un gaz chaud comme effluent de la zone d'oxydation, un gaz comprenant essentiellement du dioxyde de carbone et de l'eau comme effluent de la zone de réduction, et un gaz de balayage comme effluent de la zone de balayage, et
- on sépare le dioxyde de carbone de l'eau contenus dans l'effluent de la zone de réduction, dans une unité auxiliaire.
